# EUROPEAN PATENT APPLICATION

(11) **EP 1 796 306 A1**
(43) Date of publication of application: **13.06.2007**
(21) Application number: 05788407.4
(22) Date of filing: 29.09.2005
(51) Int. Cl.: H04L 7/00, H04B 3/54, H04L 13/08

(54) **DATA COMMUNICATION SYSTEM, DATA REPRODUCING APPARATUS AND DATA REPRODUCING METHOD**

(30) Priority: 29.09.2004 JP 2004284025
(71) Applicant: MITSUBISHI MATERIALS CORPORATION, Tokyo 100-8117 (JP)
(72) Inventor: YAMASHITA, Nobuyuki, Mitsubishi Materials Corp., Chichibu-gun, Saitama 3688502 (JP); TARI, Kazuyoshi, Mitsubishi Materials Corp., Chichibu-gun, Saitama 3688502 (JP); NAKAMURA, Kenzo, Mitsubishi Materials Corp., Chichibu-gun, Saitama 3688502 (JP)
(74) Representative: HOFFMANN EITLE
(86) International application number: PCT/JP2005/017942
(87) International publication number: WO 2006/035869

(57) **Abstract**

The invention provides a data communication system in which synchronization is taken between devices transmitting and receiving continuously reproduced data such as audio signals or visual signals by using a power line, and data delay is compensated for, a data reproducing device, and a method of reproducing data.

The data reproducing device includes an audio data receiving unit 31 that receives data transmitted by a data transmitting device, a data buffer 32 that temporarily accumulates the received data, and a data amount monitoring unit 33 that monitors an amount of the accumulated data. Further, the data reproducing device includes a voltage control oscillator 34 that outputs an electric signal such that when the monitored data amount is 'greater', 'equal', or 'smaller' than a threshold value within a predetermined range, an oscillation frequency is 'increased', 'maintained', or 'decreased'. Furthermore, the data reproducing device includes a D/A converter 35 that reads the data accumulated in the data buffer 32 according to the electric signal and converts the data into an analog signal from a digital signal, and an audio data reproducing unit 36 that reproduces the converted data.

## Description

### TECHNICAL FIELD

The present invention relates to a communication system that performs transmission and reception of continuous data, such as an audio signal or a visual signal, a data reproducing device, and a method of reproducing data.

### BACKGROUND ART OF THE INVENTION

In general, a technology disclosed in Patent Document 1 as below has been known in which, when data communication is performed, data delay is prevented from occurring due to the difference of paths of a network.
This technology is related to a method in which data delay is prevented from occurring when a visual signal or the like is transmitted in a circumference where fluctuation of data delay in packet exchange, an ATM (Asynchronous Transfer Mode) network or the like is large and synchronization of clocks between a data transmitting device and a data receiving device is not fixed.
However, according to the technology disclosed in JP-A-2002-368726, the data receiving device receives clocks supplied by the data receiving device through a transmission path, and synchronization between the respective devices is taken. Accordingly, it cannot be used in power line communication in which data is transmitted and received by using a power line.
PATENT DOCUMENT 1: Japanese Unexamined Patent Application, First Publication No. 2002-368726

### DETAILED DESCRIPTION OF THE INVENTION

### PROBLEMS TO BE SOLVED BY THE INVENTION

The invention provides a data communication system in which synchronization is taken between devices transmitting and receiving continuously reproduced data such as audio signals or visual signals by using a power line, and data delay is compensated for, a data reproducing device, and a method of reproducing data.

### MEANS FOR SOLVING THE PROBLEMS

According to the present invention of claim 1, a data communication system in which data reproducing devices receive data transmitted by a data transmitting device through a power line. The data transmitting device includes a data output unit that outputs an analog signal transmitted to the data reproducing device, a reference oscillator that outputs an electric signal of a predetermined oscillation frequency, an A/D converter that converts the analog signal outputted by the data output unit into a digital signal on the basis of the electric signal outputted by the reference oscillator, and a data transmitting unit that transmits the data converted into the digital signal by the A/D converter to the data reproducing device through the power line. The data reproducing device includes a data receiving unit that receives the data transmitted by the data transmitting device, a data buffer that temporarily accumulates the data received by the data receiving unit, a data amount monitoring unit that monitors an amount of the data accumulated by the data buffer, a voltage control oscillator that outputs an electric signal, such that when the data amount monitored by the data amount monitoring unit is greater than a threshold value within a predetermined range, an oscillation frequency is increased, when the data amount monitored by the data amount monitoring unit is equal to the threshold value within the predetermined range, a predetermined oscillation frequency is maintained, and when the data amount monitored by the data amount monitoring unit is smaller than the threshold value within the predetermined threshold value, the oscillation frequency is decreased, a D/A converter that reads the data accumulated in the data buffer according to the electric signal outputted by the voltage control oscillator, and converts the data into an analog signal from a digital signal, and a data reproducing unit that reproduces the data outputted by the D/A converter.

According to the present invention of claim 2, a data reproducing device that receives data transmitted by a data transmitting device through a power line. The data reproducing device includes a data receiving unit that receives the data transmitted by the data transmitting device, a data buffer that temporarily accumulates the data received by the data receiving unit, a data amount monitoring unit that monitors an amount of the data accumulated by the data buffer, a voltage control oscillator that outputs an electric signal, such that when the data amount monitored by the data amount monitoring unit is greater than a threshold value within a predetermined range, an oscillation frequency is increased, when the data amount monitored by the data amount monitoring unit is equal to the threshold value within the predetermined range, a predetermined oscillation frequency is maintained, and when the data amount monitored by the data amount monitoring unit is smaller than the threshold value within the predetermined range, the oscillation frequency is decreased, a D/A converter that reads the data accumulated in the data buffer according to the electric signal outputted by the voltage control oscillator, and converts the data into an analog signal from a digital signal, and a data reproducing unit that reproduces the data outputted by the D/A converter.

According to the present invention of claim 3, there is provided a method of reproducing data in which data reproducing devices receive data transmitted by a data transmitting device through a power line to reproduce the data. The method includes a first step of receiving the data transmitted by the data transmitting device by means of a data receiving unit, a second step of temporarily accumulating the data received in the first step by means of a data buffer, a third step of monitoring an amount of the data accumulated by the data buffer in the second step by means of a data amount monitoring unit, a fourth step of outputting an electric signal by means of a voltage control oscillator, such that when the data amount monitored by the data amount monitoring unit in the third step is greater than a threshold value within a predetermined range, an oscillation frequency is increased, when the data amount monitored by the data amount monitoring unit is equal to the threshold value within the predetermined range, a predetermined oscillation frequency is maintained, and when the data amount monitored by the data amount monitoring unit is smaller than the threshold value within the predetermined range, the oscillation frequency is decreased, a fifth step of reading the data accumulated in the data buffer according to an oscillation frequency of the electric signal outputted by the voltage control oscillator and converting the data into an analog signal from a digital signal, by means of a D/A converter, and a sixth step of reproducing the data converted into the analog signal in the fifth step by means of a data reproducing unit.

### ADVANTAGEOUS EFFECTS OF THE INVENTION

According to the aspects of the invention, the data received by the data reproducing device is temporarily stored in the data buffer, and the amount of the data accumulated in the data buffer is monitored by the data amount monitoring unit. Accordingly, when the amount of the data accumulated in the data buffer is increased, the data amount read from the data buffer can be increased, and when the amount of the data accumulated in the data buffer is decreased, the data mount read from the data buffer can be decreased.
For this reason, when the data of the audio signal transmitted by the data transmitting device through the power line is reproduced by the plurality of data reproducing devices, synchronization can be taken among the plurality of data reproducing devices. Further, it is possible to prevent a portion of the data accumulated in the data buffer from being lost due to the overflow of the data, and to prevent the reproduced audio signal from being intermitted due to the non existence of the data accumulated in the data buffer. Therefore, the data can be reproduced at the predetermined speed and phase.

### BRIEF DESCRIPTION OF THE DRAWINGS

Fig. 1 is a block diagram illustrating a structure of an audio signal reproducing apparatus 3 according to an embodiment of the invention.
Fig. 2 is a diagram illustrating a structure of a data communication system 10 according to an embodiment of the invention.
Fig. 3 is a block diagram illustrating an audio signal transmitting apparatus 2 according to an embodiment of the invention.
Fig. 4 is a flowchart illustrating a flow of processes by a data communication system 10 according to an embodiment of the invention.

### DESCRIPTION OF THE REFERENCE SYMBOLS

- 1:: POWER LINE
- 2:: AUDIO SIGNAL TRANSMITTING APPARATUS
- 3(3a, 3b):: AUDIO SIGNAL REPRODUCING APPARATUS
- 10:: DATA COMMUNICATION SYSTEM
- 21:: AUDIO SIGNAL OUTPUT UNIT
- 22:: A/D CONVERTER
- 23:: REFERENCE OSCILLATOR
- 24:: AUDIO SIGNAL TRANSMITTING UNIT
- 31:: AUDIO SIGNAL RECEIVING UNIT
- 32:: DATA BUFFER
- 33:: DATA AMOUNT MONITORING UNIT
- 34:: VOLTAGE CONTROL OSCILLATOR
- 35:: D/A CONVERTER
- 36:: AUDIO SIGNAL REPRODUCING UNIT

### BEST MODE FOR CARRYING OUT THE INVENTION

Hereinafter, a data communication system 10 according to the preferred embodiments of the invention will be described with reference to the accompanying drawings.

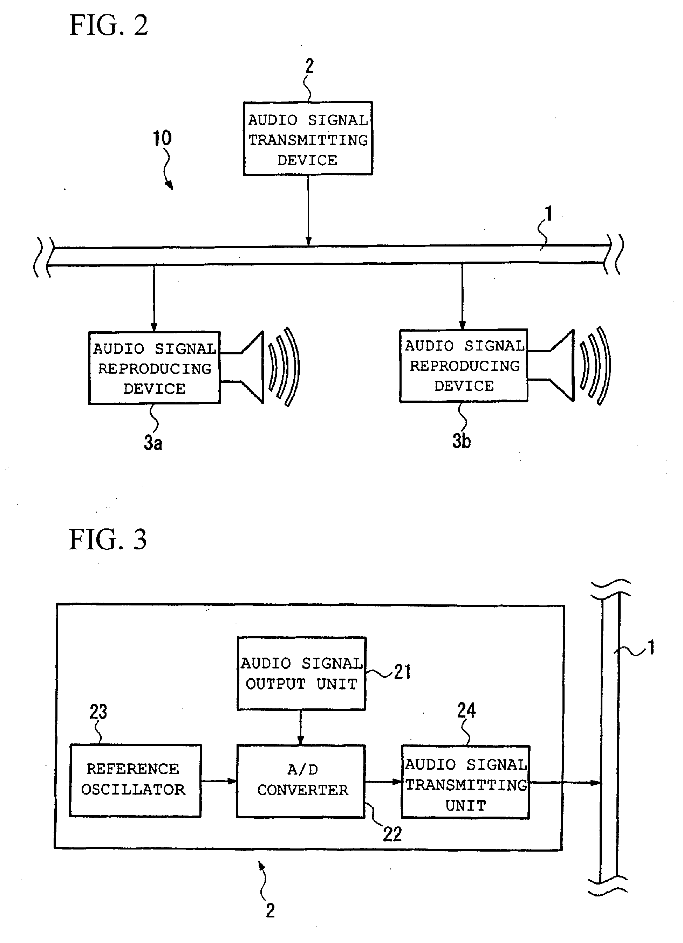

Fig. 2 is a diagram illustrating a structure of a data communication system 10 according to an embodiment of the invention. The data communication system 10 includes one audio signal transmitting device 2, and two audio reproducing apparatuses 3a and 3b.
The audio signal transmitting device 2 and the two audio reproducing apparatuses 3a and 3b are connected to a power line 1. A power for driving a device is supplied from the power line 1 to each of the audio signal transmitting device 2, and the audio signal reproducing devices 3a and 3b.
Further, data transmission and reception can be performed between the audio signal transmitting device 2, and the audio signal reproducing devices 3a and 3b through the power line 1.

In this embodiment, a case will be described in which the audio signal transmitting device 2 transmits audio signals of left and right sounds of stereo sounds to the audio signal reproducing devices 3a and 3b, respectively, and the left sound of the stereo sound is reproduced by the audio signal reproducing device 3a and the right sound of the stereo sounds is reproduced by the audio signal reproducing device 3b.
Further, Fig. 2 illustrates a case in which the two audio signal reproducing devices 3, that is, the audio signal reproducing devices 3a and 3b, are connected to the power line 1, but the invention is not limited thereto.
For example, when a Dolby surround system is used, three or more of audio signal reproducing devices 3 are connected to the power line 1 to take synchronization of sounds reproduced by the audio signal reproducing devices.

Next, the audio signal transmitting device 2 of Fig. 2 will be described.
Fig. 3 is a block diagram illustrating a structure of the audio signal reproducing device 2 according to the embodiment of the invention.
The audio signal transmitting device 2 includes an audio signal output unit 21, an A/D converter 22, a reference oscillator 23, and an audio signal transmitting unit 24.
The audio signal output unit 21 outputs an audio signal, such classic music, which is continuously reproduced, to the A/D converter 22.
The reference oscillator 23 oscillates with a predetermined frequency, and outputs an electrical signal of a predetermined cycle to the A/D converter 22.

The A/D converter 22 converts an audio signal outputted by the audio signal output unit 21, that is, an analog signal, into a digital signal on the basis of an electric signal of a predetermined frequency outputted by the reference oscillator 23. In the A/D converter 22, the audio signal that is converted into the analog signal is outputted to the audio signal transmitting unit 24.
The audio signal transmitting unit 24 transmits the audio signals outputted by the A/D converter 22 to the audio signal reproducing devices 3a and 3b (see Fig. 2) through the power line 1, respectively.

Next, the audio signal reproducing device 3 of Fig. 2 will be described in detail.

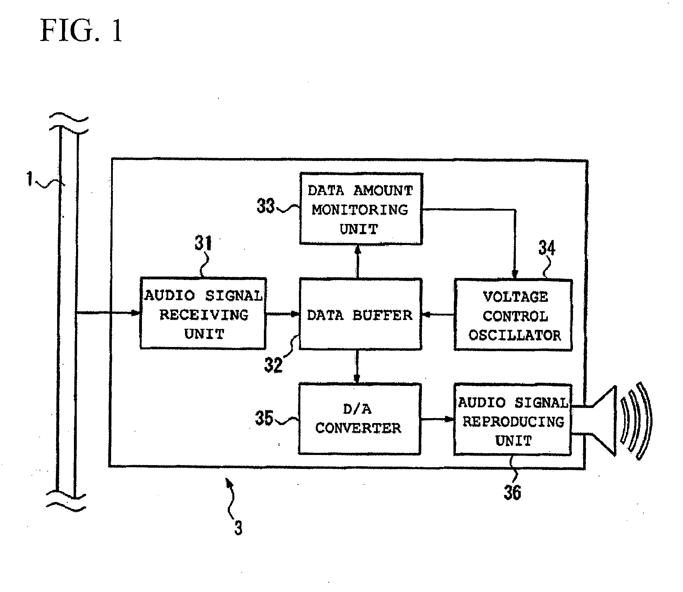

Fig. 1 is a block diagram illustrating a structure of the audio signal reproducing device 3 according to this embodiment.
The audio signal reproducing device 3 includes the audio signal receiving unit 31, the data buffer 32, the data amount monitoring system 33, the voltage control oscillator 34, the D/A converter 35, and the audio signal reproducing unit 36.
The audio signal receiving unit 31 receives the audio signal transmitted by the audio signal transmitting unit 24 (see Fig. 3) of the audio signal transmitting unit 2 through the power line 1.

Specifically, the audio signal receiving unit of the audio signal reproducing device 3a (see Fig. 2) receives the audio signal of the left sound of the stereo sounds, and the audio signal receiving unit (Fig. 2) of the audio signal reproducing device 3b receives the audio signal of the right sound of the stereo sounds.
The audio signal receiving unit 31 outputs the received audio signal to the data buffer 32.
The data buffer 32 temporarily accumulates the audio signal outputted by the audio signal receiving unit 31.
The data that is accumulated in the data buffer 32 is outputted to the D/A converter 35 by control of the voltage control oscillator 34, which will be described in detail below.
Further, when the data accumulated in the data buffer 32 overflows, the data that is firstly accumulated in the data buffer 32 is deleted, and data that is newly inputted by the audio signal receiving unit 31 is accumulated. Further, when the data accumulated in the data buffer 32 may be empty, the data that is lastly accumulated in the data buffer 32 is repeatedly outputted.

The data amount monitoring unit 33 monitors the data amount of the audio signal accumulated in the data buffer 32, and applies a voltage corresponding to the amount of the data accumulated in the data buffer 32 to the voltage control oscillator 34.
A threshold value k within a predetermined range is stored in the voltage control oscillator 34 of the audio signal reproducing device 3 according to this embodiment. When it is determined that 'the audio signal accumulated in the data buffer 32 is greater than threshold values k of a predetermined range', the voltage applied to the voltage control oscillator 34 is increased so as to raise the outputted oscillation frequency, thereby increasing a data amount of the audio signal outputted from the data buffer 32 to the D/A converter 35. By performing this control, it is possible to prevent audio signal from being lost due to the overflow of the audio signal accumulated in the data buffer 32.

Further, when it is determined by the data monitoring unit 33 that 'the audio signal accumulated in the data buffer 32 is in a range of the threshold values k of a predetermined range', the voltage applied to the voltage control oscillator 34 is maintained as a predetermined value so as to make the outputted oscillation frequency constant, thereby maintaining a data amount of the audio signal outputted from the data buffer 32 to the D/A converter 35 as a predetermined value. By performing this control, it is possible to prevent audio signal from being lost due to the overflow of the audio signal accumulated in the data buffer 32.
Meanwhile, when it is determined by the data monitoring unit 33 that 'the audio signal accumulated in the data buffer 32 is less than the threshold values k of a predetermined range', the voltage applied to the voltage control oscillator 34 is decreased so as to lower the outputted oscillation frequency, thereby decreasing a data amount of the audio signal outputted from the data buffer 32 to the D/A converter 35. By performing this control, it is possible to prevent audio signal from being intermitted due to the non existence of the audio signal accumulated in the data buffer 32.

The A/D converter 35 converts an audio signal outputted by the data buffer 32, that is, a digital signal, into an analog signal on the basis of an electric signal of a predetermined oscillation frequency outputted by the voltage control oscillator 34. In the D/A converter 35, the audio signal that is converted into the analog signal is outputted to the audio signal reproducing unit 36.
In the audio signal reproducing unit 36, the audio signal inputted by the D/A converter 35 is reproduced through a speaker.
Specifically, the audio signal reproducing unit of the audio signal reproducing device 3a (see Fig. 2) reproduces of the audio signal of the left sound of the stereo sound, and the audio signal reproducing unit of the audio signal reproducing unit 3b (see Fig. 2) reproduces the audio signal of the right sound of the stereo sound.

Generally, since the difference exists in a distance of a transmitting path of a power line between the audio signal transmitting device 2, and the audio signal reproducing devices 3a and 3b, the data transmitting speed varies, or a timing or a size of a data packet of the audio signal that is transmitted by the data transmitting device 2 varies. Therefore, the time difference is generated between the sounds that are respectively reproduced by the audio signal reproducing devices 3a and 3b, which makes it not possible to take synchronization.
However, as described above, since the data buffer 32 for compensating for data delay is provided in the audio signal reproducing devices 3a and 3b, the sounds or the like can be reproduced in a state in which the synchronization is taken between the audio signal reproducing devices 3a and 3b.

Next, a method of reproducing an audio signal of the audio signal reproducing device 3 in the data communication system 10 according to the embodiment of the invention will be described.

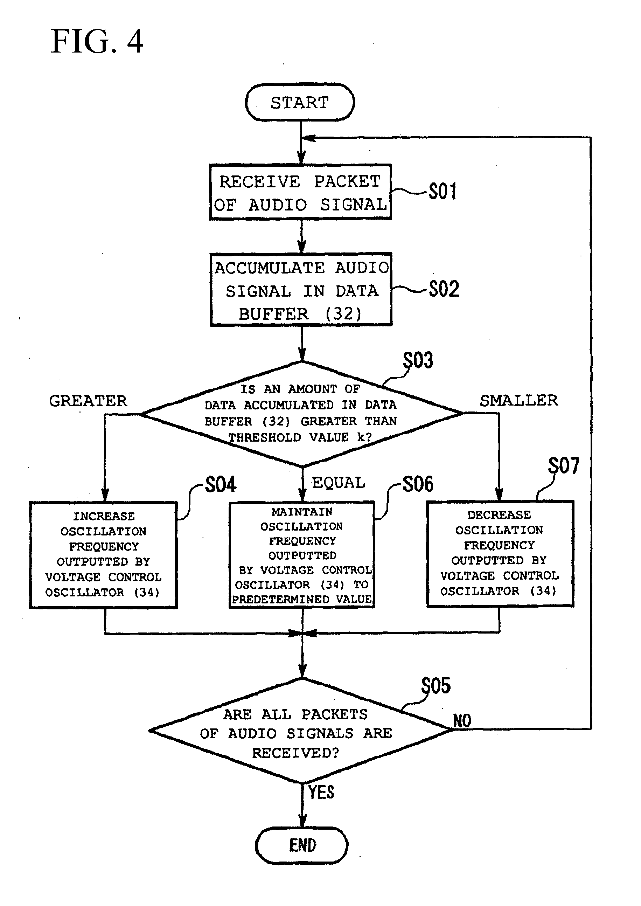

Fig. 4 is a flowchart illustrating processes of the method of reproducing an audio signal in the audio signal reproducing device 3 according to the embodiment of the invention.
First, the audio signal receiving unit 31 receives a packet of the audio signal transmitted by the audio signal transmitting unit 24 (see Fig. 3) through the power line 1 (step S01).
Then, the packet of the audio signal received by the audio signal receiving unit 31 in step S01 is temporarily accumulated in the data buffer 32 (step S02).

The data amount of the audio signal that is accumulated in the data buffer 32 is monitored by the data monitoring unit 33, and it is determined whether the amount of the data accumulated in the data buffer 32 is 'lager' or 'smaller' or 'equal', as compared with the threshold value K of the predetermined range (step S03).
When it is determined that the amount of the data accumulated in the data buffer 32 is greater than the threshold value K of the predetermined range, it is determined as 'greater' in step S03, and the process proceeds to step S04.

In step S04, by increasing the voltage applied to the voltage control oscillator 34, the oscillation frequency outputted by the voltage control oscillator 34 is controlled such that it is increased (step S04).
If the oscillation frequency of the voltage control oscillator 34 is increased, a large amount of audio signals are read out from the data buffer 32, and then outputted to the D/A converter 35.
The audio signals that are inputted to the D/A converter 35, that is, the digital signal is converted into an analog signal, and then reproduced through a speaker of the audio signal reproducing unit 36.

Next, it is determined whether the audio signal reproducing device 3 receives all audio signals or not (step S05). When it is determined that the audio signal reproducing device 3 does not receive all the audio signals, it is determined as 'No' in step S05, and the process proceeds to step S01 again. Then, as described above, the process proceeds to step S03 through the process of step S02.
When the amount of the data accumulated in the data buffer 32 is in predetermined threshold values k of a predetermined range, it is determined as 'equal' in step S03, and the process proceeds to S06.

In step S06, by applying a predetermined voltage to the voltage control oscillator 34, the oscillation frequency outputted by the voltage control oscillator 34 is controlled such that it is maintained as a predetermined value.
The oscillation frequency of the voltage control oscillator 34 is maintained to a predetermined value, so that a data amount of an audio signal read from the data buffer 32 can be constantly maintained.
The audio signal that is inputted to the D/A converter 35 is converted from the digital signal to the analog signal, and then outputted through the speaker of the audio signal reproducing unit 36.

Then, it is determined whether the audio signal reproducing device 3 receives all audio signals or not (step S05). When it is determined that the audio signal reproducing device 3 does not receive all the audio signals, it is determined as 'No' in step S05, and the process proceeds to step S01 again. Then, as described above, the process proceeds to step S03 through the process of step S02.
When the amount of the data accumulated in the data buffer 32 is in predetermined threshold values k of a predetermined range, it is determined as 'smaller' in step S03, and the process proceeds to S07.

In step S07, by decreasing a voltage applied to the voltage control oscillator 34, the oscillation frequency outputted by the voltage control oscillator 34 is controlled such that it is decreased.
If the oscillation frequency outputted by the voltage control oscillator 34 is decreased, a small amount of audio signals are read out from the data buffer 32, and then outputted to the D/A converter 36.
The audio signal that is inputted to the D/A converter 35 is converted from the digital signal to the analog signal, and then outputted through the speaker of the audio signal reproducing unit 36.
Then, it is determined whether the audio signal reproducing device 3 receives all audio signals or not (step S05). When it is determined that the audio signal reproducing device 3 receives all the audio signals, it is determined as 'YES' in step S05, and the processes according to the flowchart illustrated in Fig. 4 are completed.

In the data communication system 10 according to the embodiment of the embodiment of the invention, since the synchronization needs to be taken between the data reproducing devices 3a and 3b connected to the power line 1, the structure of the data reproducing device 3 can be simplified.
Further, since phase synchronization of the audio signal is taken between the data transmitting devices 3a and 3b, it is possible to reproduce a sound signal having an excellent sound quality.
Further, since the amount of the data accumulated in the data buffer 32 is controlled to be constant, a sound skip can be prevented from occurring.
Furthermore, a sound signal can be reproduced at predetermined speed and phase regardless of a timing or packet length according to the encoding of the audio signal.

Further, in the above-described embodiment, the case has been described in which the transmission and the reception of the audio signal are made through the power line 1. However, the invention is not limited thereto.
For example, transmission and reception of visual data are performed by using the data communication system 10 according to the embodiment of the invention. Accordingly, similar to the case of the above-described audio signal, video recorded in the visual data or the like can be reproduced without the intermittence.

In the above-described embodiment, the audio signal output unit 21, the A/D converter 22, the reference oscillator 23, and the audio signal transmitting unit 24 that are shown in Fig. 3, and the audio signal receiving unit 31, the data buffer 32, the data monitoring unit 33, the reference voltage oscillator 34, the D/A converter 35, the audio signal reproducing unit 36 that are shown in Fig. 1 may be achieved by dedicated hardware.

Further, the audio signal output unit 21, the A/D converter 22, the reference oscillator 23, and the audio signal transmitting unit 24 that are shown in Fig. 3, and the audio signal receiving unit 31, the data buffer 32, the data monitoring unit 33, the reference voltage oscillator 34, the D/A converter 35, the audio signal reproducing unit 36 that are shown in Fig. 1 may be constructed by a memory or a CPU (central operation unit), and a program for achieving their functions may be loaded on the memory to achieve their functions.

Furthermore, a program for achieving functions of the audio signal output unit 21, the A/D converter 22, the reference oscillator 23, and the audio signal transmitting unit 24 that are shown in Fig. 3, and the audio signal receiving unit 31, the data buffer 32, the data monitoring unit 33, the voltage control oscillator 34, the D/A converter 35, the audio signal reproducing unit 36 that are shown in Fig. 1 may be recorded in a computer readable recording medium, the program recorded in the recording medium may be read by the computer to be executed, and the delay of the audio signal or visual data may be compensated for. The 'computer system' is a concept that includes hardware, such as an OS or a peripheral device.

Further, when a WWW system is used, the 'computer system' is a concept that also includes a homepage providing circumference (or display circumference).
The 'computer readable recording medium' is a concept that includes portable media, such as a flexible disk, an optical magnetic disk, a ROM, a CD-ROM, or the like, and a storage device, such as a hard disk, which is built in the computer system. Further, the 'computer readable recording medium' is a concept that includes communication lines in a case in which a program is transmitted through a network such as the Internet or a communication line such as a telephone line and the program is dynamically stored for a short time, and a non-volatile memory in the computer system becoming a server or a client in which a program is stored for a predetermined time. The above-described program may achieve a portion of the above-described functions, and the above-described functions may be achieved by a combination with a program previously recorded in the computer system.

Until now, the embodiment of the invention has been described with reference to the accompanying drawings, but the specific structure is not limited to the above-described embodiment. Various modifications and changes can be made without departing from the spirit and scope of the invention.

### INDUSTRIAL APPLICABILITY

The data delay compensating system according to the embodiment of the invention can be used in a consumer device in which communication of data, such as an audio signal or visual data, which is continuously reproduced, is performed through the power line.

## Claims

1. A data communication system in which data reproducing devices receive data transmitted by a data transmitting device through a power line,
wherein the data transmitting device includes
a data output unit that outputs an analog signal transmitted to the data reproducing device;
a reference oscillator that outputs an electric signal of a predetermined oscillation frequency;
an A/D converter that converts the analog signal outputted by the data output unit into a digital signal on the basis of the electric signal outputted by the reference oscillator; and
a data transmitting unit that transmits the data converted into the digital signal by the A/D converter to the data reproducing device through the power line, and
the data reproducing device includes
a data receiving unit that receives the data transmitted by the data transmitting device;
a data buffer that temporarily accumulates the data received by the data receiving unit;
a data amount monitoring unit that monitors an amount of the data accumulated by the data buffer;
a voltage control oscillator that outputs an electric signal, such that when the data amount monitored by the data amount monitoring unit is greater than a threshold value within a predetermined range, an oscillation frequency is increased, when the data amount monitored by the data amount monitoring unit is equal to the threshold value within the predetermined range, a predetermined oscillation frequency is maintained, and when the data amount monitored by the data amount monitoring unit is smaller than the threshold value within the predetermined threshold value, the oscillation frequency is decreased;
a D/A converter that reads the data accumulated in the data buffer according to the electric signal outputted by the voltage control oscillator, and converts the data into an analog signal from a digital signal; and
a data reproducing unit that reproduces the data outputted by the D/A converter.

2. A data reproducing device that receives data transmitted by a data transmitting device through a power line, the data reproducing device comprising:
a data receiving unit that receives the data transmitted by the data transmitting device;
a data buffer that temporarily accumulates the data received by the data receiving unit;
a data amount monitoring unit that monitors an amount of the data accumulated by the data buffer;
a voltage control oscillator that outputs an electric signal, such that when the data amount monitored by the data amount monitoring unit is greater than a threshold value within a predetermined range, an oscillation frequency is increased, when the data amount monitored by the data amount monitoring unit is equal to the threshold value within the predetermined range, a predetermined oscillation frequency is maintained, and when the data amount monitored by the data amount monitoring unit is smaller than the threshold value within the predetermined range, the oscillation frequency is decreased;
a D/A converter that reads the data accumulated in the data buffer according to the electric signal outputted by the voltage control oscillator, and converts the data into an analog signal from a digital signal; and
a data reproducing unit that reproduces the data outputted by the D/A converter.

3. A method of reproducing data in which data reproducing devices receive data transmitted by a data transmitting device through a power line to reproduce the data, the method comprising:
a first step of receiving the data transmitted by the data transmitting device by means of a data receiving unit;
a second step of temporarily accumulating the data received in the first step by means of a data buffer;
a third step of monitoring an amount of the data accumulated by the data buffer in the second step by means of a data amount monitoring unit;
a fourth step of outputting an electric signal by means of a voltage control oscillator, such that when the data amount monitored by the data amount monitoring unit in the third step is greater than a threshold value within a predetermined range, an oscillation frequency is increased, when the data amount monitored by the data amount monitoring unit is equal to the threshold value within the predetermined range, a predetermined oscillation frequency is maintained, and when the data amount monitored by the data amount monitoring unit is smaller than the threshold value within the predetermined range, the oscillation frequency is decreased;
a fifth step of reading the data accumulated in the data buffer according to an oscillation frequency of the electric signal outputted by the voltage control oscillator and converting the data into an analog signal from a digital signal, by means of a D/A converter; and
a sixth step of reproducing the data converted into the analog signal in the fifth step by means of a data reproducing unit.
